# EUROPÄISCHE PATENTSCHRIFT

(11) **EP 0 867 549 B1**
(45) Veröffentlichungstag und Bekanntmachung des Hinweises auf die Patenterteilung: **25.09.2002**
(21) Anmeldenummer: 98103766.6
(22) Anmeldetag: 04.03.1998
(51) Int. Cl.: D04H 1/00, D04H 13/00

(54) **Duroplastgebundene Faserformteile und Verfahren zu ihrer Herstellung**
Fibre containing moulding with thermosetting binder and method of production
Pièce moulée fibreuse avec liant thermodurcissable et sa méthode de fabrication

(30) Priorität: 25.03.1997 DE 19712509
(43) Veröffentlichungstag der Anmeldung: 30.09.1998
(73) Patentinhaber: Bakelite AG, 58642 Iserlohn-Letmathe (DE)
(72) Erfinder: Müller, Franz-Josef, 58642 Iserlohn (DE)

(56) Entgegenhaltungen:
- EP-A- 0 254 807

## Beschreibung

Die Erfindung betrifft aus Fasern hergestellte Formteile, wie sie z.B. als klimaregulierende Schallabsorptionsteile und Formteile mit hoher Oberflächen- und Splitterfestigkeit u.a. im Automobilbau verwendet werden.
Üblicherweise werden derartige Formteile durch Formpressung und gleichzeitige Härtung aus phenolharzgebundenen Faserschichten (Vliesstoffen) hergestellt.

Diese Produkte haben den Nachteil, daß sie gelegentlich, vor allem nach Einwirkung erhöhter Temperaturen und Feuchtigkeit einen störenden Geruch verbreiten, der größtenteils vom Härtungsmittel (Hexamethylentetramin) bzw. dessen aminischen Zersetzungsprodukten herrührt.

Gemäß EP-A 0 254 807 wird dieses Problem dadurch gelöst, daß als Bindemittel ein pulverförmiges Gemisch aus einem nicht wärmereaktiven Phenolharz und einem oder mehreren Kondensationsprodukten aus der Gruppe der Phenol-, Amino- oder Epoxidharze eingesetzt wird. Obwohl dadurch die durch Hexamethylentetramin bedingte Geruchsbildung vermieden wird, verbleibt ein Restgeruch aus dem Phenolharz.

Es ist daher Aufgabe der Erfindung, duroplastgebundene Faserformteile herzustellen bei denen zwar einerseits die guten mechanischen, schallabsorptions- und brandtechnischen Eigenschaften der phenolharzgebundenen Faserformteile erhalten bleiben, bei denen aber möglichst jede phenolharzbedingte Geruchsbildung eliminiert ist. Es ist weiterhin Aufgabe der Erfindung, Faserformteile mit höherer Festigkeit herzustellen um ohne Qualitätsverluste eine Gewichtsreduzierung der entsprechenden Kraftfahrzeug-Bauteile zu erzielen.

Die Lösung der Aufgabe erfolgt durch duroplastgebundene Faserformteile gemäß der Ansprüche 1 - 4 sowie durch Verfahren zu ihrer Herstellung gemäß der Ansprüche 5 - 8.

Es wurde gefunden, daß sich die Aufgabe lösen läßt durch duroplastgebundene Faserformteile, die aus zwei oder mehr duroplastgebundenen Faserschichten bestehen, wobei mindestens zwei Faserschichten verschiedene duroplastische Bindemittel enthalten.

Duroplastische Bindemittel sind selbsthärtende Harze oder mit Härter oder Härtungskatalysator versehene Harze, die oberhalb einer bestimmten Temperatur zu einem hochpolymeren Produkt härten.
Einsetzbare Harze sind Diallylphthalat-, Epoxid-, Harnstoff-, Melamin-, Melamin-Harnstoff-, Melamin-Phenol-, Phenol- und ungesättigte Polyesterharze und entsprechende Kombinationen.
Bevorzugte Bindemittel sind solche auf Basis von Phenolharz und von Epoxidharz.

Die bevorzugten Faserformteile bestehen demnach aus einer oder mehreren innenliegenden Faserschichten, die Bindemittel auf Basis von Phenolharz enthalten. Diese werden als Innenlage bezeichnet. Auf der Ober - und .Unterseite der Innenlage befinden sich als Deckschichten Faserschichten, die Bindemittel auf Basis von Epoxidharz enthalten.

Es ist dabei überraschend, daß die so hergestellten Faserformteile keinen Geruch nach Phenolharz oder aminischen Abbauprodukten von Hexamethylentetramin abgeben, obwohl die einzelnen duroplastgebundenen Faserschichten und damit auch die gesamten Faserformteile luft- und gasdurchlässig sind.
Es ist ein weiterer unerwarteter Vorteil dieser Faserformteile, daß sie eine erhöhte Festigkeit zeigen, daß es somit möglich ist, mit dünneren erfindungsgemäßen Faserformteilen gleiche Festigkeiten zu erzielen wie mit üblichen, schwereren Faserformteilen, die nur mit Phenolharz gebunden sind.

Insbesondere wird eine weitere Erhöhung der Festigkeit und eine Verminderung der Geruchsemissionen erzielt, wenn die mit den duroplastischen Bindemitteln versehenen Faserschichten nach dem Krempelprozeß hergestellt sind.

Als Bindemittel auf Basis von Phenolharz können alle Kondensationsprodukte aus phenolischen Verbindungen und Aldehyden, insbesondere aus Phenol, Kresol oder Xylenol und Formaldehyd eingesetzt werden und zwar sowohl Resole als auch übliche Novolak-Härter-, insbesondere Novolak-Hexamethylentetramin-Gemische. Die eingesetzten Phenolharze sind in der Regel pulverförmig.

Bindemittel auf Basis von Epoxidharz sind in der Regel pulverförmige Gemische aus Epoxidverbindungen mit mindestens zwei Epoxidgruppen pro Molekül und einem Härter. Als Härter sind bevorzugt latente Härter oder zumindest solche, die zwischen dem Zeitpunkt der Mischung und der Härtung eine ausreichende Verarbeitungszeit zulassen. Beispiele hierfür sind Säureanhydride, Imidazolderivate, bevorzugt aber Novolake oder Metallkomplexverbindungen wie sie z.B. aus EP-B 0 518 908 bekannt sind.

Als Fasern können anorganische Fasern wie z.B. Glasfasern ebenso eingesetzt werden wie organische faserartige Materialien oder beliebige Fasergemische.
Bevorzugt werden organische Fasern wie Wolle, Baumwolle, Zellwolle, Jute, Flachs, Hanf, Polyester- oder Acrylfasern.
Ein Großteil des verwendeten Fasermaterials wird über einen Reißprozeß aus Textilabfällen gewonnen.
Diese Fasern werden nach an sich bekannten Verfahren mit den jeweiligen Bindemitteln gemischt und zu einzelnen Faserschichten (Vliesen, insbesondere Krempelvliesen) gelegt.

Erfindungsgemäß werden mehrere Faserschichten (Vliesbahnen) mit mindestens zwei verschiedenen duroplastischen Bindemitteln übereinandergelegt.
Bevorzugt werden dabei ein oder mehrere Faserschichten mit Phenolharz als Bindemittel zusammen als Innenlage verwendet und an Ihrer Ober- und Unterseite jeweils mit einer Decklage aus einer oder mehreren Faserschichten, die Epoxidharz als Bindemittel enthalten, versehen.

Die einzelnen Faserschichten oder die so hergestellten Gelege (Halbzeuge) werden in an sich bekannter Weise zugeschnitten und können entweder vorgehärtet und erst zu einem späteren Zeitpunkt unter Formgebung ausgehärtet werden, oder die Gelege werden sofort als Planware bei Temperaturen oberhalb der Härtungstemperaturen der duroplastischen Bindemittel gehärtet.

Im einfachsten Falle werden Faservliese mit jeweils unterschiedlichen Bindemitteln als Halbzeuge miteinander kombiniert und bei einer Temperatur oberhalb der Härtungstemperaturen der duroplastischen Bindemittel, gegebenenfalls unter Formgebung, miteinander verpreßt und gehärtet.

So wird z.B. eine Hutablage mit einem Flächengewicht von 2500 g/m² aus zwei je 500 g/m² schweren Halbzeugen mit einem
Epoxidharz-Härter-Gemisch als Bindemittel und einem dazwischenliegenden 1500 g/m² schweren Halbzeug mit Novolak-Hexamethylentetramin als Bindemittel gefertigt.

Das bevorzugte Verfahren zur Herstellung der erfindungsgemäßen duroplastgebundenen Faserschichten ist der Krempelprozeß, bei dem die Fasern zu feinsten Floren ausgekämmt werden, die nun, mit Bindemitteln versehen werden und so lange in Längs- und Querablage übereinandergeschichtet werden, bis das angestrebte Flächengewicht erreicht ist, wobei die obere Deck-, Mittel- und die untere Lage je nach Wunsch unterschiedliche Bindemittel enthalten. Bevorzugt enthalten auch hier die Mittellagen Phenolharze und die oberen und unteren Außenlagen Epoxidharze als Bindemittel.

Im insbesondere bevorzugten Verfahren werden in einem Verfahrensschritt Faservliese (Faserschichten) nach dem Krempelprozeß in der Art hergestellt, daß die kontinuierlich hergestellte Faserbahn in Längsrichtung in drei gleich oder unterschiedlich breiten Zonen mit unterschiedlichen Bindemitteln in der Art bestreut wird, daß die Innenzone das Bindemittel für die Innenlage des Faserformteils enthält und daß die beiden Außenzonen das oder die Bindemittel für die obere und untere Außenlage des Faserformteils enthalten.
Die so hergestellte Vliesbahn wird in Kreuzlegetechnik so gelegt, daß die neu gebildete Vliesbahn Faserschichten mit unterschiedlichen Bindemitteln enthält.

Diese Vliesbahn wird kurzzeitig so erhitzt, daß die duroplastischen Bindemittel aufschmelzen und auf der Faser fixieren aber nicht aushärten. Danach wird die Vliesbahn abgekühlt und konfektioniert. Abschließend werden die so hergestellten Halbzeuge, gegebenenfalls unter Formgebung, in an sich bekannter Weise verpreßt und gehärtet, wobei auch hierzu mehrere dieser Halbzeuge übereinandergelegt und miteinander verpreßt und gehärtet werden können.

### Beispiel

Das eingesetzte Phenolharzbindemittel ist ein Phenol-Novolak mit einem Erweichungspunkt von 98°C gemischt mit 6 Gew.% Hexamethylentetramin.

Das eingesetzte Epoxidharzbindemittel ist ein Gemisch aus einem Epoxidharz auf Basis Bisphenol A (Epoxidäquivalent: 183; Erweichungspunkt: 75°C) und 5 Gew% eines latenten Härters bestehend aus einer pulverisierten "festen Lösung" von 30% 2-Methylimidazol in 70% eines hochschmelzenden Phenolnovolaks.

Nach dem Krempelverfahren wird kontinuierlich ein Faservlies aus Textilfasergemisch und Pulverharzbindemitteln hergestellt. Dabei wird die Vliesbahn in Längsrichtung in drei gleich breiten Zonen mit unterschiedlichen Bindemitteln bestreut: Die beiden Außenzonen mit Epoxidharzbindemittel und die Innenzone mit Phenolharzbindemittel.

Die so hergestellte Vliesbahn wird in an sich bekannter Weise in Kreuzlegetechnik so gelegt, daß eine neue Vliesbahn gebildet wird, bei der die Innenlage Phenolharz und die obere und die untere Außenlage Epoxidharz als Bindemittel enthält.

Diese Vliesbahn wird so schnell durch einen 150°C heißen Umluftofen geführt, daß die Bindemittel aufschmelzen und an den Fasern fixieren aber nicht aushärten. Danach wird die Bahn abgekühlt, konfektioniert und danach unter Formgebung 60 s lang bei 180-190°C und 170 bar veipreßt und gehärtet.

Das so hergestellte duroplastgebundene Faserformteil ist selbstverlöschend und hat bei äußerer Flammeinwirkung eine niedrige Rauchgasdichte.
Das Faserformteil ist auch bei Einwirkung erhöhter Temperaturen (40-70°C) und Feuchtigkeit (90% relative Luftfeuchtigkeit) geruchlos. Es hat gegenüber einem nur mit Phenolharz gebundenen Faserformteil mit gleichem Flächengewicht eine um 27% erhöhte Festigkeit. Trennerscheinungen einzelner Lagen, sog. Spalten, werden nicht festgestellt.

## Patentansprüche

1. Duroplastgebundene Faserformteile, **dadurch gekennzeichnet, daß** sie aus zwei oder mehr duroplastgebundenen Faserschichten bestehen, wobei mindestens zwei Faserschichten verschiedene duroplastische Bindemittel enthalten.

2. Duroplastgebundene Faserformteile nach Anspruch 1, **dadurch gekennzeichnet, daß** sie Bindemittel auf Basis von Phenolharz und von Epoxidharz enthalten.

3. Duroplastgebundene Faserformteile nach den Ansprüchen 1 und 2, **dadurch gekennzeichnet, daß** sie aus einer oder mehreren innenliegenden Faserschichten, der Innenlage, bestehen, die Bindemittel auf Basis von Phenolharz enthalten , und einer oder mehreren oberen und unteren Faserschichten, den Außenlagen, die Bindemittel auf Basis von Epoxidharz enthalten.

4. Duroplastgebundene Faserformteile nach den Ansprüchen 1 bis 3, **dadurch gekennzeichnet, daß** die mit den duroplastischen Bindemitteln versehenen Faserschichten nach dem Krempelprozeß hergestellt sind.

5. Verfahren zur Herstellung von duroplastgebundenen Faserformteilen gemäß der Ansprüche 1 bis 4, **dadurch gekennzeichnet, daß** mindestens zwei Faserschichten mit unterschiedlichen duroplastischen Bindemitteln miteinander kombiniert und bei Temperaturen oberhalb der Härtungstemperaturen der duroplastischen Bindemittel gehärtet werden.

6. Verfahren nach Anspruch 5, **dadurch gekennzeichnet, daß** die Faserschichten so miteinander kombiniert werden, daß eine oder mehrere Faserschichten mit Bindemittel auf Basis von Phenolharz die Innenlage bilden, und die Innenlage an ihrer Ober- und Unterseite mit jeweils einer Außenlage aus einer oder mehreren Faserschichten, die Bindemittel auf Basis von Epoxidharz enthalten, versehen wird.

7. Verfahren nach den Ansprüchen 5 und 6, **dadurch gekennzeichnet, daß** die Herstellung der mit duroplastischem Bindemittel versehenen Faserschichten nach dem Krempelprozeß erfolgt.

8. Verfahren nach den Ansprüchen 5 bis 7, **dadurch gekennzeichnet, daß** Faservliese nach dem Krempelprozeß in der Art hergestellt werden, daß die Faserbahn in Längsrichtung in drei gleich oder unterschiedlich breiten Zonen mit unterschiedlichen Bindemitteln so bestreut wird, daß die Innenzone Phenolharzbindemittel und die beiden Außenzonen Epoxidharzbindemittel enthalten, die so hergestellte Vliesbahn in Kreuzlegetechnik so gelegt wird, daß die neu gebildete Vliesbahn eine Innenlage mit Phenolharz und eine obere und eine untere Außenlage mit Epoxidharz enthält, diese Vliesbahn kurzzeitig so erhitzt wird, daß die Bindemittel aufschmelzen und auf der Faser fixieren aber nicht aushärten, die Vliesbahn danach abgekühlt, konfektioniert und gegebenenfalls unter Formgebung verpreßt und gehärtet wird.

## Claims

1. Thermoset-bonded fibre mouldings, **characterized in that** they consist of two or more thermoset-bonded fibre layers, at least two fibre layers containing different thermoset binders.

2. Thermoset-bonded fibre mouldings according to Claim 1, **characterized in that** they contain binders based on phenolic resin and on epoxy resin.

3. Thermoset-bonded fibre mouldings according to Claims 1 and 2, **characterized in that** they consist of one or more inner fibre layers, the inner ply, which contain binder based on phenolic resin, and one or more upper and lower fibre layers, the outer plies, which contain binder based on epoxy resin.

4. Thermoset-bonded fibre mouldings according to Claims 1 to 3, **characterized in that** the fibre layers provided with the thermoset binders are produced by the carding process.

5. A process for producing thermoset-bonded fibre mouldings according to Claims 1 to 4, **characterized in that** at least two fibre layers with different thermoset binders are combined with one another and are hardened at temperatures above the hardening temperatures of the thermoset binders.

6. A process according to Claim 5, **characterized in that** the fibre layers are combined with one another in such a way that one or more fibre layers with binder based on phenolic resin form the inner ply, and the inner ply is provided at its upper and lower side in each case with an outer ply composed of one or more fibre layers which contain binder based on epoxy resin.

7. A process according to Claims 5 and 6, **characterized in that** the fibre layers provided with thermoset binder are produced by the carding process.

8. A process according to Claims 5 to 7, **characterized in that** fibre fleeces are produced by the carding process in a way that the fibre web is sprinkled with different binders in the longitudinal direction, in three zones of equal or different width, such that the inner zone contains phenolic-resin binder and the two outer zones contain epoxy-resin binder, the fleece web thus produced is laid using the cross-laying technique such that the newly formed fleece web contains an inner ply with phenolic resin and an upper and a lower outer ply with epoxy resin, this fleece web is heated for a short time such that the binders melt and fix on the fibre but do not harden, the fleece web is then cooled, prepared, and compressed and hardened with optional shaping.

## Revendications

1. Pièces moulées en fibres, liées par un plastique thermodurcissable, **caractérisées en ce qu'**elles consistent en deux ou plus de deux couches de fibres liées par un plastique thermodurcissable, au moins deux couches de fibres contenant différents liants thermodurcissables.

2. Pièces moulées en fibres, liées par un plastique thermodurcissable selon la revendication 1, **caractérisées en ce qu'**elles contiennent un liant à base de résine phénolique de résine époxyde.

3. Pièces moulées en fibres, liées par un plastique thermodurcissable selon les revendications 1 et 2, **caractérisées en ce qu'**elles consistent en une ou plusieurs couches de fibres internes de substrat interne, qui contiennent des liants à base de résine phénolique et une ou plusieurs couches de fibres supérieures et inférieures, les substrats extérieurs qui contiennent des liants à base de résine époxyde.

4. Pièces moulées en fibres, liées par plastique thermodurcissable selon les revendications 1 à 3, **caractérisées en ce qu'**elles sont préparées avec les couches de fibres munies de liant thermodurcissable selon le procédé de cardage.

5. Procédé pour la préparation de pièces moulées en fibres liées par plastique thermodurcissable selon les revendications 1 à 4, **caractérisé en ce qu'**au moins deux couches de fibres avec différents liants thermodurcissables sont combinées entre elles et sont durcies à des températures au-dessus des températures de durcissement thermodurcissables.

6. Procédé selon la revendication 5, **caractérisé en ce que** les couches de fibres sont combinées entre elles de telle sorte qu'une ou plusieurs couches de fibres avec des liants à base de résine phénolique forment le substrat interne, et le substrat interne est muni sur son côté supérieur et inférieur chaque fois d'un substrat extérieur constitué d'une ou de plusieurs couches de fibres qui contiennent des liants à base de résine époxyde.

7. Procédé selon les revendications 5 et 6 **caractérisé en ce que** la préparation des couches de fibres munies de liants thermodurcissables s'effectue selon le procédé de cardage.

8. Procédé selon les revendications 5 à 7, **caractérisé en ce que** la nappe de fibres est réalisée selon le procédé de cardage, de telle sorte que la bande continue de fibres reçoit différents liants dans le sens longitudinal selon trois zones de même largeur ou de largeur différente, **en ce que** la zone interne contient un liant de résine phénolique et les deux zones externes un liant de résine époxyde, le voile de fibres ainsi préparé est disposé selon la technique du pliage croisé, **en ce que** le nouveau voile ainsi formé contient un substrat interne avec de la résine phénolique et un substrat extérieur supérieur et inférieur avec de la résine époxyde, ce voile continu est chauffé brièvement de telle sorte que les liants entrent en fusion et se fixent sur les fibres sans toutefois durcir, le voile continu étant ensuite refroidi, confectionné et éventuellement mis en forme et durci.
